Europäisches Patentamt

European Patent Office

Office européen des brevets

(11) Numéro de publication: **0 288 384**
**A1**

## (12) DEMANDE DE BREVET EUROPEEN

(21) Numéro de dépôt: **88400966.3**

(22) Date de dépôt: **20.04.88**

(51) Int. Cl.⁴: **A 01 G 9/10**

(30) Priorité: **24.04.87 FR 8705866**

(43) Date de publication de la demande:
**26.10.88 Bulletin 88/43**

(84) Etats contractants désignés:
**AT BE CH DE ES GB GR IT LI LU NL SE**

(71) Demandeur: **SOCIETE DE PRODUCTION GRAINIERE S.A. - SPG -**
**Z.I. Courtine 17 et 19 rue du Petit Mas**
**F-84000 Avignon (FR)**

(72) Inventeur: **Walter, Bertrand**
**3, Impasse des Thuyas**
**F-30133 Les Angles (FR)**

(74) Mandataire: **Chereau, Louis**
**NOVAPAT-CABINET CHEREAU 63bis, Boulevard Bessières**
**F-75017 Paris (FR)**

(54) **Pré-plant pour la culture de plantes vertes, à fleurs ou potagères.**

(57) Le pré-plant selon l'invention est caractérisé en ce qu'il est constitué d'un milieu de culture (1) dont la composition est adaptée à la nature et à la variété de la plante et d'une graine (2) fixée mécaniquement par exemple par collage à ce milieu de culture.

La germination et la croissance sont obtenues par simple adjonction d'eau lors de l'utilisation.

Avantage : facilité de stockage, augmentation de la durée de stockage, facilité de transport par gain de poids et de volume.

Figure unique

## Description

## PRE-PLANT POUR LA CULTURE DE PLANTES VERTES, A FLEURS OU POTAGERES

La présente invention a pour objet un produit de culture à usage particulier ou industriel.

On connaît des plantes commercialisées après croissance partielle appelées "plants". Ces produits sont obtenus par mise en terre de graines que l'on fait germer généralement dans des milieux favorisés avec température, degré hygrométrique et luminosité contrôlés. A un stade peu avancé de la croissance et suffisant pour que le plant ait perdu sa fragilité, ce dernier peut être commercialisé, transporté, transplanté. Il reste néanmoins que le transport requièrt des emballages particuliers, un certain soin dans les manipulations, des durées relativement faibles. D'autre part, les volumes transportés sont importants et le poids également puisqu'il subsiste une quantité d'eau non négligeable dans la motte qui maintient le pied pré-développé.

Par ailleurs on trouve également des graines en sachet hermétique. Celles-ci sont mises en terre et nécessitent généralement en fonction de l'espèce un milieu de culture particulier pour permettre sa croissance ainsi que des traitements curatifs,préventifs contre les maladies. Quant au pouvoir de rétention d'eau du milieu, son acidité, sa densité et sa toxicité, ils doivent être pris en compte pour chaque espèce si l'on souhaite obtenir une germination et un développement optimum des graines.

Dans le cas de plusieurs espèces différentes cultivées par l'utilisateur, il est nécessaire pour celui-ci de disposer de différents composants et produits de traitement correspondant à chacune de ces espèces. De plus, il lui faudra doser chaque milieu après avoir pris connaissance par ses propres moyens de la composition adéquate. En effet, celle-ci est rarement détaillée sur l'emballage des sachets de graines

Tout ceci conduit généralement l'utilisateur à se procurer des plants à croissance avancée de façon à s'affranchir des problèmes qui viennent d'être cités mais il lui faudra alors accepter un prix de revient élevé et une qualité moindre du produit qui aura subi des transferts de lieu, des changements de température et d'éclairage qui peuvent conduire à 1a déchéance par non-adaptation dans le nouveau milieu.

La présente invention a pour but un "pré-plant" destiné à la culture de fleurs , plantes vertes ou potagères, caractérisé en ce qu'il comprend un milieu de culture à taux d'hygrométrie réduit dans lequel est fixée mécaniquement au moins une graine, le milieu de culture étant composé d'éléments particulièrement adaptés à la germination de la graine.

Le milieu de culture est plus particulièrement constitué d'une composition qui comprend de la tourbe, de la cellulose et de la vermiculite

La fixation mécanique peut être obtenue par collage direct de la graine sur les fibres du milieu de culture.

Le milieu de culture comporte de plus des éléments d'addition tels que des agents mouillants, des éléments nutritifs, des éléments régulateurs d'humidité, des produits fongicides, des désherbants sélectifs.

De plus, le milieu de culture est soumis préalablement à l'adjonction de la graine à un traitement par la chaleur qui permet d'éliminer toute toxicité

Les avantages d'un tel pré-plant sont tout d'abord de permettre une germination et une croissance optimum de la plantule, de ne nécessiter aucun matériel et matériau particuliers, d'autoriser un transport aisé du lieu de fabrication au lieu de consommation tant du point de vue poids que du point de vue du volume. En outre,l'adaptation du produit est progressive et il n'y a pas de risque dû à une transplantation. Dans le cas où l'utilisateur souhaite réaliser la germination en atmosphère contrôlée, il attendra l'apparition de la plantule en serre et effectuera alors la transplantation.

Le prix de revient pour l'utilisateur est donc réduit par les coûts de transport eux-mêmes diminués,par le coût de fabrication relativement bas du produit en milieu industriel, par des conditions de stockage simplifiées, par l'écoulement échelonné des stocks, par l'augmentation de la durée de stockage.

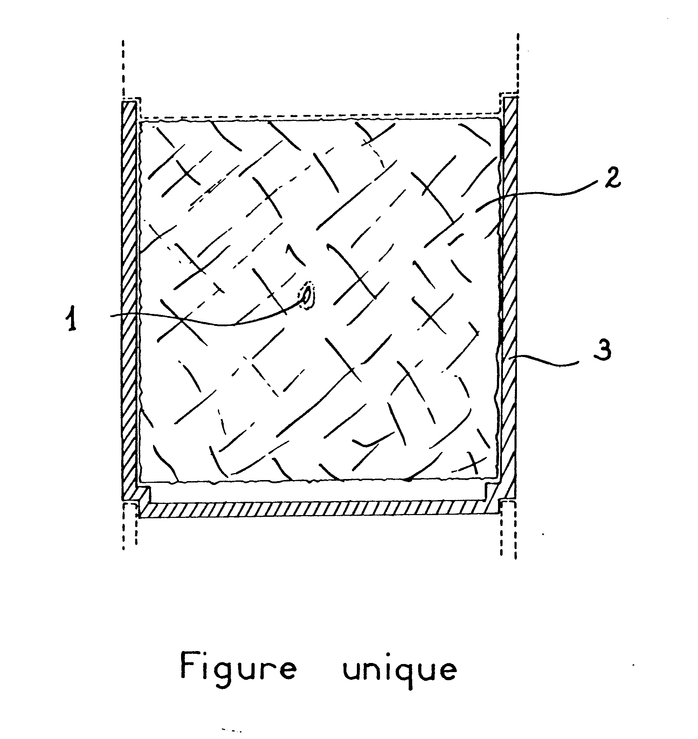

Sur la figure annexée, on a représenté en coupe un pré-plant selon l'invention étant entendu que la forme peut être modifiée ainsi que la composition sans pour cela sortir du cadre de l'invention.

En 1 on a référencé la motte à laquelle pour la commodité du transport on donne préférentiellement la forme cubique. Cette motte 1 est constituée d'un milieu de culture dont les caractéristiques essentielles sont un faible degré hygrométrique qui empêche toute germination intempestive, et une constitution à partir de tourbe,de cellulose et de vermiculite. Le mélange de ces composants peut varier entre 40 et 90 % de tourbe, 10 à 60 % de cellulose et 0 à 20 % de vermiculite.

On associe alors à ces éléments inertes, des éléments nutritifs, des fongicides, des désherbants sélectifs, des agents mouillants qui permettent notamment une meilleure hydratation et par là-même une meilleure régulation d'humidité. De même, le pH du milieu est contrôlé afin qu'il soit équilibré ou pour le moins qu'il corresponde à celui nécessaire pour un développement harmonieux de la plante.

La graine 2 est placée au sein du milieu de culture. Elle y est maintenue par collage. On peut utiliser une colle soluble dans l'eau de façon à ce que la graine soit libérée de sa couche de colle progressivement dès le premier arrosage par l'utilisateur. Parallèlement les fibres vont s'hydrater et par là même vont gonfler ce qui va assurer le blocage définitif de la graine dans son milieu de culture.

On peut prévoir un conditionnement 3 extérieur à l'ensemble qui sera mis en place lors de la fabrication, sa forme permettant un gerbage facile et une mise en palette par exemple.

La présente invention n'est pas limitée aux exemples de réalisation qui viennent d'être décrits, elle est au contraire susceptible de modifications et de variantes qui apparaîtront à l'homme de l'art.

C'est ainsi que la forme extérieure de la motte peut être cylindrique ou polyédrique sans sortir du cadre de l'invention. De même, on comprend que le produit peut comporter plusieurs graines par motte. Une variante du maintien de ces graines consiste à effectuer une mise en place par insertion mécanique dans les fibres.

**Revendications**

1 - Pré-plant destiné à la culture de fleurs, plantes vertes ou potagères, caractérisé en ce qu'il comprend un milieu de culture à taux d'hygrométrie réduit dans lequel est fixée mécaniquement au moins une graine, le milieu de culture étant composé d'éléments particulièrement adaptés à la germination de cette graine.

2 - Pré-plant selon la revendication 1, caractérisé en ce que le milieu de culture est plus particulièrement constitué d'une composition à base de tourbe et/ou de cellulose et/ou de vermiculite.

3 - Pré-plant selon la revendication 1, caractérisé en ce que la fixation mécanique est obtenue par collage de la graine et/ou insertion mécanique sur les fibres du milieu de culture.

4 - Pré-plant selon la revendication 3, caractérisé en ce que le collage est réalisé à l'aide d'une colle soluble dans l'eau.

5 - Pré-plant selon la revendication 1, caractérisé en ce que le milieu de culture comporte des additifs tels que des agents mouillants, des éléments nutritifs, des éléments régulateurs d'humidité, des produits fongicides, des désherbants sélectifs.

6 - Pré-plant selon la revendication 1, caractérisé en ce que le milieu de culture est soumis à un traitement préalable par la chaleur.

0288384

Figure unique

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-2 785 969   (CLAWSON) <br> * En entier * <br> --- | 1-6 | A 01 G    9/10 |
| X | FR-A-1 275 153   (GENEST) <br> * En entier * <br> --- | 1-5 | |
| X | FR-A-2 440 438   (EDET) <br> * Page 2, ligne 35 - page 5, ligne 16; figures 1-4 * <br> --- | 1-3,5 | |
| X | DE-A-3 408 236   (HAUNI-WERKE KÖRBER) <br> * Résumé; page 13, ligne 14 - page 14, ligne 28; page 16, lignes 4-33 * <br> --- | 1-3,5 | |
| X | FR-A-2 442 809   (GUICHEBARON) <br> * Page 1, lignes 19-26; revendications 1,2 * <br> ----- | 1 | |

**DOMAINES TECHNIQUES RECHERCHES (Int. Cl.4)**

A 01 G
A 01 C

Le présent rapport a été établi pour toutes les revendications

| Lieu de la recherche | Date d'achèvement de la recherche | Examinateur |
|---|---|---|
| LA HAYE | 01-08-1988 | HERYGERS J.J. |

EPO FORM 1503 03.82 (P0402)